# EUROPÄISCHE PATENTSCHRIFT

(11) **EP 2 923 875 B1**
(45) Veröffentlichungstag und Bekanntmachung des Hinweises auf die Patenterteilung: **18.05.2016**
(21) Anmeldenummer: 14161496.6
(22) Anmeldetag: 25.03.2014
(51) Int. Cl.: B60K 15/035

(54) **Einfüllvorrichtung und Verfahren zur Herstellung einer Einfüllvorrichtung**
Filling device and method for producing a filling device
Dispositif de remplissage et procédé de fabrication d'un dispositif de remplissage

(43) Veröffentlichungstag der Anmeldung: 30.09.2015
(73) Patentinhaber: Magna Steyr Fuel Systems GesmbH, 8261 Sinabelkirchen (AT)
(72) Erfinder: Felber, Andreas, 8063 Hart-Purgstall (AT); Hendler, René, 8020 Graz (AT)
(74) Vertreter: Zangger, Bernd

(56) Entgegenhaltungen:
- EP-A2- 1 136 299
- EP-A2- 1 845 296
- WO-A1-00/29773
- US-A1- 2005 224 135

## Beschreibung

### Gebiet der Erfindung

Die vorliegende Erfindung betrifft eine Einfüllvorrichtung zum Einfüllen von Kraftstoff in einen Kraftfahrzeugtank, umfassend ein Einfüllrohr und ein Entlüftungsrohr.

### Stand der Technik

Das Befüllen eines Kraftfahrzeugtanks über ein Einfüllrohr ist hinlänglich bekannt.

Ebenso ist bereits bekannt dass zum Abführen von Gasen aus dem Kraftfahrzeugtank beim Betanken eine vom Einfüllrohr getrennte eigene Entlüftungsleitung verwendet wird.

So offenbart etwa die WO 2012/126593 eine Tankentlüftungsvorrichtung für ein Kraftfahrzeug mit einem Einfüllrohr und einer Entlüftungsleitung. Eine andere Entlüftungsleitung ist aus der DE 10 2012 104 849 A1 bekannt.

Weiters ist bekannt, die Permeation von Gasen, insbesondere von Kohlenwasserstoffen, durch die Wände eines Kraftstofftanks mittels einer dampfdichten Sperrschicht zu verringern, beispielsweise aus DE 10 2005 025 905 A1, ebenso wie die Permeation durch die Wände eines Einfüllrohres, beispielsweise aus der WO 00/29773.

Die gattungsgemäße EP 1 845 296 A2 offenbart ein Einfüllrohr dass eine Sperrschicht aufweisen kann und über einen Steg mit einem Entlüftungsrohr verbunden ist.

### Zusammenfassung der Erfindung

Es ist eine Aufgabe der Erfindung, eine Einfüllvorrichtung zum Einfüllen von Kraftstoff in einen Kraftfahrzeugtank anzugeben, die einfach und kostengünstig herstellbar ist und dabei eine wesentliche Reduktion von unerwünschten Gasemissionen erlaubt. Eine weitere Aufgabe der Erfindung ist es ein einfaches Herstellungsverfahren für eine solche Einfüllvorrichtung anzugeben.

Die Lösung der Aufgabe erfolgt durch eine Einfüllvorrichtung zum Einfüllen von Kraftstoff in einen Kraftfahrzeugtank, umfassend ein Einfüllrohr und ein Entlüftungsrohr, wobei das Entlüftungsrohr einstückig mit dem Einfüllrohr ausgebildet ist, das Entlüftungsrohr durch eine Quetschung mit dem Einfüllrohr verbunden ist und zumindest das Einfüllrohr und das Entlüftungsrohr eine Sperrschicht zur Verhinderung von Gasaustritt, insbesondere von Kohlenwasserstoffaustritt, aufweisen. Die Sperrschicht verläuft durch das Einfüllrohr, durch die Quetschung und durch das Entlüftungsrohr.

Erfindungsgemäß ist ein Entlüftungsrohr einstückig mit einem Einfüllrohr ausgeführt, wobei die beiden Rohre in ihrer Längsrichtung lediglich durch eine Quetschung des Rohrmaterials voneinander getrennt bzw. durch diese Quetschung miteinander verbunden sind. Auf diese Weise können Einfüllrohr und Entlüftungsrohr aus einem einzigen Stück kostengünstig gefertigt werden.

Dabei weist das Einfüllrohr und das Entlüftungsrohr eine Sperrschicht auf, die die Permeation von Gasen reduzieren kann.

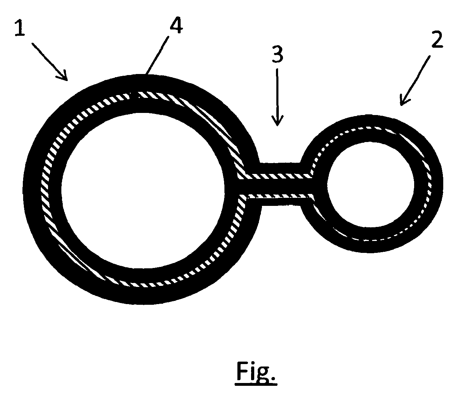

Weiterbildungen der Erfindung sind in den abhängigen Ansprüchen, der Beschreibung sowie der beigefügten Zeichnung angegeben.

Besonders bevorzugt läuft die Sperrschicht dabei um den gesamten Umfang der Einfüllvorrichtung. Hierdurch wird eine besonders starke Reduktion der Gasemissionen erreicht.

Das Entlüftungsrohr und das Einfüllrohr sind vorzugsweise aus Kunststoff gefertigt.

Bevorzugt ist dann die Sperrschicht als mittlere Schicht, im Inneren des Kunststoffs, ausgebildet. Hierdurch wird eine besonders einfache und kostengünstige Herstellung der Einfüllvorrichtung ermöglicht.

Die Sperrschicht kann auch, insbesondere in Form eines Schrumpfschlauches, außen am Entlüftungsrohr und Einfüllrohr angebracht sein. Bevorzugte Materialien der Sperrschicht sind beispielsweise EVOH oder PA9.

Ein Verfahren zur Herstellung einer solchen Einfüllvorrichtung umfasst die Schritte, dass ein Kunststoffvorformling, insbesondere ein Kunststoffrohr bzw. -schlauch, der bereits eine Sperrschicht umfasst, insbesondere eine als mittlere Schicht ausgebildete Sperrschicht, in ein doppelläufiges Blasformwerkzeug eingelegt wird und mittels zweier Blasnadeln durch Blasformen geformt wird.

Die Sperrschicht kann auch, beispielsweise als Schrumpfschlauch, außen angebracht werden.

### Kurzbeschreibung der Zeichnung

Die Erfindung wird im Folgenden beispielhaft unter Bezugnahme auf die Zeichnung beschrieben.
- Fig.: ist eine Schnittansicht einer erfindungsgemäßen Einfüllvorrichtung.

### Beschreibung der Erfindung

In Fig. ist schematisch ein Schnitt quer zur Längsachse durch eine erfindungsgemäße Einfüllvorrichtung dargestellt.

Die Einfüllvorrichtung umfasst ein Einfüllrohr 1 und ein Entlüftungsrohr 2, beide aus Kunststoff und aus einem einzigen Vorformling hergestellt. Einfüllrohr 1 und Entlüftungsrohr 2 sind durch eine Quetschung 3 separiert. Rund um das Einfüllrohr 1, die Quetschung 3 und das Entlüftungsrohr 2 verläuft mittig im Kunststoff eine gemeinsame Sperrschicht 4, zur Verringerung von Ausgasungen durch die Wandungen der Einfüllvorrichtung.

Die Einfüllvorrichtung kann einfach mittels Blasformen erzeugt werden, indem ein gemeinsamer Kunststoffschlauch, der bereits mittig in der Kunststoffwandung eine Sperrschicht umfasst, in ein doppelläufiges Blasformwerkzeug eingelegt wird und dann mittels zweier Blasnadeln durch Blasformen die Doppelrohrform der Einfüllvorrichtung ausgeformt wird.

### Bezugszeichenliste

- 1: Einfüllrohr
- 2: Entlüftungsrohr
- 3: Quetschung
- 4: Sperrschicht

## Patentansprüche

1. Einfüllvorrichtung zum Einfüllen von Kraftstoff in einen Kraftfahrzeugtank, umfassend ein Einfüllrohr (1) und ein Entlüftungsrohr (2),
**dadurch gekennzeichnet, dass** das Entlüftungsrohr (2) einstückig mit dem Einfüllrohr (1) ausgebildet ist, das Entlüftungsrohr (2) durch eine Quetschung (3) mit dem Einfüllrohr (1) verbunden ist und zumindest das Einfüllrohr (1) und das Entlüftungsrohr (2) eine Sperrschicht (4) zur Verhinderung von Gasaustritt aufweisen, wobei die Sperrschicht (4) durch das Einfüllrohr (1), durch die Quetschung (3) und durch das Entlüftungsrohr (2) verläuft.

2. Einfüllvorrichtung nach zumindest einem der vorhergehenden Ansprüche,
**dadurch gekennzeichnet, dass** das Entlüftungsrohr (2) und das Einfüllrohr (1) aus Kunststoff gefertigt sind.

3. Einfüllvorrichtung nach Anspruch 2,
**dadurch gekennzeichnet, dass** die Sperrschicht (4) als mittlere Schicht, im Inneren des Kunststoffs ausgebildet ist.

4. Einfüllvorrichtung nach Anspruch 2,
**dadurch gekennzeichnet, dass** die Sperrschicht (4) als äußere Schicht, insbesondere als Schrumpfschlauch, ausgebildet ist.

5. Verfahren zur Herstellung einer Einfüllvorrichtung nach zumindest einem der vorhergehenden Ansprüche,
**dadurch gekennzeichnet, dass** ein Kunststoffvorformling, der eine Sperrschicht (4) umfasst, in ein doppelläufiges Blasformwerkzeug eingelegt wird und mittels zweier Blasnadeln durch Blasformen geformt wird.

6. Verfahren nach Anspruch 5,
**dadurch gekennzeichnet, dass** die Sperrschicht als Schrumpfschlauch außen am Entlüftungsrohr (2) und am Einfüllrohr (1) angebracht wird.

## Claims

1. Filler device for introducing fuel into a motor vehicle tank, comprising a filler pipe (1) and a vent pipe (2),
**characterized in that** the vent pipe (2) is formed integrally with the filler pipe (1), the vent pipe (2) is connected to the filler pipe (1) by a crimp (3) and at least the filler pipe (1) and the vent pipe (2) have/has a barrier layer (4) for preventing the escape of gas, wherein the barrier layer (4) extends through the filler pipe (1), through the crimp (3) and through the vent pipe (2).

2. Filler device according to at least one of the preceding claims,
**characterized in that** the vent pipe (2) and the filler pipe (1) are manufactured from plastic.

3. Filler device according to Claim 2,
**characterized in that** the barrier layer (4) is designed as a central layer, within the plastic.

4. Filler device according to Claim 2,
**characterized in that** the barrier layer (4) is designed as an outer layer, in particular as a shrink-on sleeve.

5. Method for producing a filler device according to at least one of the preceding claims,
**characterized in that** a plastic pre-form, which comprises a barrier layer (4), is placed in a double-barrelled blow mould and moulded by blow moulding by means of two blowing pins.

6. Method according to Claim 5,
**characterized in that** the barrier layer is applied as a shrink-on sleeve to the outside of the vent pipe (2) and of the filler pipe (1).

## Revendications

1. Dispositif de remplissage pour le remplissage d'un réservoir de véhicule automobile avec du carburant, comprenant un tube de remplissage (1) et un tube de désaérage (2), **caractérisé en ce que** le tube de désaérage (2) est réalisé d'une seule pièce avec le tube de remplissage (1), le tube de désaérage (2) est connecté par un écrasement (3) au tube de remplissage (1) et au moins le tube de remplissage (1) et le tube de désaérage (2) présentent une couche barrière (4) pour empêcher la sortie de gaz, la couche barrière (4) s'étendant à travers le tube de remplissage (1), à travers l'écrasement (3) et à travers le tube de désaérage (2).

2. Dispositif de remplissage selon au moins l'une quelconque des revendications précédentes,
**caractérisé en ce que** le tube de désaérage (2) et le tube de remplissage (1) sont fabriqués en plastique.

3. Dispositif de remplissage selon la revendication 2, **caractérisé en ce que** la couche barrière (4) est réalisée sous forme de couches centrales à l'intérieur du plastique.

4. Dispositif de remplissage selon la revendication 2, **caractérisé en ce que** la couche barrière (4) est réalisée sous forme de couche extérieure, en particulier sous forme de tube thermorétractable.

5. Procédé de fabrication d'un dispositif de remplissage selon au moins l'une quelconque des revendications précédentes, **caractérisé en ce qu'**une ébauche en plastique qui comprend une couche barrière (4) est introduite dans un outil de formage par soufflage double et est formée au moyen de deux aiguilles de soufflage par formage par soufflage.

6. Procédé selon la revendication 5, **caractérisé en ce que** la couche barrière est appliquée en tant que tube thermorétractable à l'extérieur sur le tube de désaérage (2) et sur le tube de remplissage (1).
